# EUROPÄISCHE PATENTSCHRIFT

(11) **EP 1 580 101 B1**
(45) Veröffentlichungstag und Bekanntmachung des Hinweises auf die Patenterteilung: **10.09.2008**
(21) Anmeldenummer: 05005680.3
(22) Anmeldetag: 16.03.2005
(51) Int. Cl.: B62D 55/06

(54) **Geländeneigungsanpassbares Fahrgestell**
Vehicle chassis adaptable to the inclination of the driving surface
Châssis d'un véhicule, le châssis étant adaptable à l'inclinaison du terrain

(30) Priorität: 26.03.2004 DE 202004004934 U
(43) Veröffentlichungstag der Anmeldung: 28.09.2005
(73) Patentinhaber: B. Teupen Maschinenbau GmbH, 48599 Gronau (DE)
(72) Erfinder: Thihatmer, Alfons, 48499 Salzbergen (DE)
(74) Vertreter: Tarvenkorn, Oliver

(56) Entgegenhaltungen:
- EP-A- 0 678 443
- EP-A2- 1 338 495
- EP-B1- 0 973 673
- DE-A1- 1 655 267
- FR-A1- 2 727 820
- JP-A- 54 013 135
- JP-A- 2000 335 457
- US-A- 4 558 758
- US-B1- 6 173 810

## Beschreibung

Die Erfindung betrifft ein mobiles Arbeitsbühnengerät mit einem an die Geländeneigung anpassbaren Fahrgestell mit zwei Gleisketteneinheiten, die mit einem Chassis verbunden sind und deren vertikaler Abstand zu dem Chassis veränderbar ist, und mit einem auf dem Chassis angeordneten Auslegerarm mit einer Arbeitsbühne.

Aus der EP 678 443 A1, die den oberbegriff des Anspruchs 1 offenbart, ist ein Fahrgestell bekannt, bei dem zwei Gleisketteneinheiten über eine Parallelogrammführung mit dem Chassis verbunden sind. Eine Höhenverstellung der Gleisketteneinheiten gegenüber dem Chassis erfolgt durch Hydraulikzylinder, die zwischen Gleisketteneinheit und Chassis wirken. Solche Fahrgestelle haben sich bewährt und werden insbesondere eingesetzt, um Arbeitsbühnen mit langen Auslegerarmen auch bei einer Neigung der Aufstandsebene kippsicher verfahren und aufstellen zu können. Es ist damit zwar möglich, auf schiefen Ebenen die Neigung des Chassis zu verändern und die Hochachse des Chassis an eine Lotrechte anzupassen. Es ist jedoch nicht möglich, eine weitere seitliche Abspreizung der Gleisketteneinheiten vom Chassis vorzunehmen. Insbesondere ist es nicht möglich, die Parallelogrammführungen zum Zwecke einer weiteren horizontalen Abstützung zu verlängern, dann müssten bei der Durchfahrt von Engstellen die Gleisketteneinheiten möglichst nah an das Chassis heran gezogen werden, wodurch der Schwerpunkt des Arbeitsgeräts nach oben verlagert würde.

Aus der EP 1 338 495 A2 ist eine Holzbearbeitungsmaschine bekannt, die ein an die Geländeneigung anpassbares Fahrgestell mit Gleisketteneinheiten aufweist. Die Gleisketteneinheiten sind über Teleskopelement mit dem Fahrgestell verbunden, wobei die Teleskopelemente schräg zur Hochachse des Fahrgestells und quer zur Fahrtrichtung ausgerichtet sind. Es sind allerdings zusätzliche Hydraulikantriebe und Teleskopzylinder in den Teleskopelementen notwendig, wodurch das Gewicht wie auch die Herstellungskosten des Fahrgestells erhöht sind. Dadurch, dass die Teleskopelemente an ihrem einen Ende am Fahrgestell festgelegt sein müssen und die einzelnen ineinander geführten Teile der Teleskopelemente eine gewisse Überlappungslänge zur Abstützung brauchen, muss zwangsweise eine Mindestlänge der Teleskopelemente gegeben sein, so dass keine besonders Platz sparende Bauweise zu erreichen ist. Für die Verwendung bei einer Arbeitsbühne ist das Fahrgestell nicht kippsicher genug.

Aufgabe der Erfindung ist es daher, ein mobiles Arbeitsbühnengerät mit einem an die Geländeneigung anpassbaren Fahrgestell zu schaffen, das besonders einfach und leicht aufgebaut ist und dass damit sowohl bei engen Durchfahrtsbreiten benutzbar ist wie auch auf Böden, z.B. innerhalb von Gebäuden, in denen nur ein bestimmter Bodendruck von den Gleisketteneinheiten ausgeübt werden darf.

Erfindungsgemäß wird diese Aufgabe durch eine mobile Arbeitsbühne mit den Merkmalen des Anspruchs 1 gelöst.

Diese Lösung hat den Vorteil, dass die Gleisketteneinheiten bei der Durchfahrt von Engstellen nah am Chassis anliegen und das Fahrgestell so insgesamt nur eine geringe Breite aufweist, und bei Fahrten im unwegsamen Gelände weit aus dem Chassis heraus gezogen werden können, so dass sich wegen der Schrägstellung der Trägerstabelemente eine große Abstützbreite zwischen den Gleisketteneinheiten ergibt. Zugleich ist immer noch eine Anpassung bei Fahrten parallel zum Hang möglich, indem das Trägerstabelement auf der einen Seite des Chassis weiter aus der Trägerstabführung herausgezogen wird als auf der anderen Seite, wenn die Trägerstabelemente unabhängig voneinander verschiebbar sind.

Bei niedrigster Chassis-Einstellung wird gleichzeitig die geringste Durchfahrbreite erreicht. Bei höchster Chassis-einstellung ist die Geländegängigkeit insofern optimiert, als dass eine breitere Aufstandsfläche für beste Standsicherheit sorgt, wobei gleichzeitig die Böschungsneigung vom Boden zu den Außenkonturen des Chassis erhöht wird, so wie der Freiraum unter dem Chassis, um unwegsames Gelände zu durchfahren.

Vorteilhaft ist, dass das Chassis mit wenigstens drei Stützarmen versehen ist, die mit ihrem einen Ende bis auf eine Aufstandsebene absenkbar sind. Diese Stützarme dienen vorrangig der Abstützung eines Fahrgestells mit ausgefahrenem Auslegerarm im Stand. Über die auf dem Boden aufgesetzten Stützarme kann aber auch eine Entlastung der Gleisketteneinheiten herbeigeführt werden, so dass diese nach Lösen entsprechender Verriegelungen, insbesondere von Bolzen, allein aufgrund ihres Gewichts nach unten aus den Trägerstabführung herausgeleiten und dann nach der geeigneter Verstellung wieder darin arretiert werden.

Weitere vorteilhafte Ausgestaltungen der Erfindung sind den weiteren Unteransprüchen zu entnehmen.

Die Erfindung wird nachfolgend mit Bezug auf die Zeichnung näher erläutert.

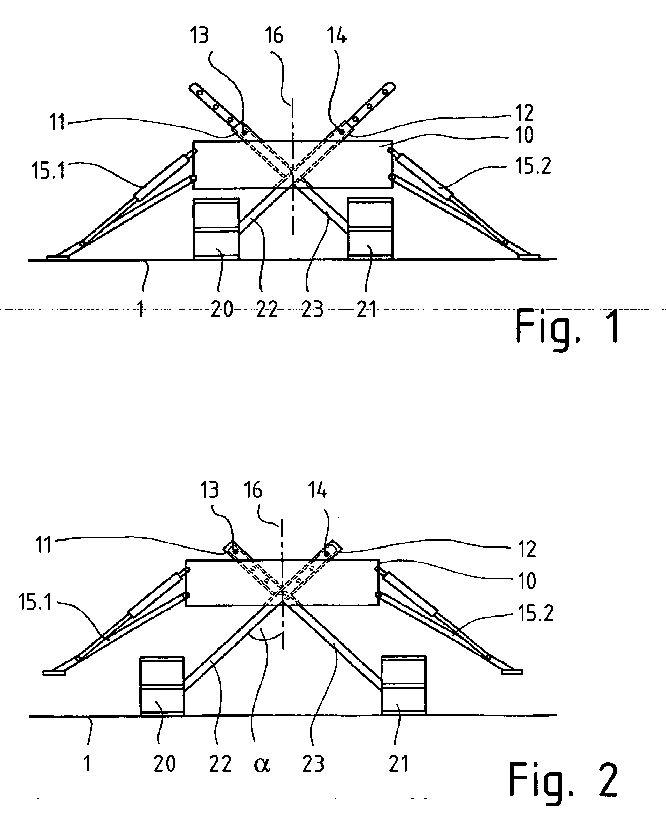

Die Figuren 1 bis 4 zeigen jeweils das Fahrgestell der erfindungsgemäßen Arbeitsbühne in Ansicht von vorn in verschiedenen Arbeitsstellungen.

Fig. 1 zeigt das Fahrgestell 10, das über wenigstens zwei Gleisketteneinheiten 20, 21 verfahrbar ist, in einer Ausgangsstellung. Die Gleisketteneinheiten 20, 21 bestehen jeweils aus einer Gleiskette, die von Trag- und Stützrollen aufgespannt wird. In den Gleisketteneinheiten kann jeweils ein Hydromotor als Antrieb integriert sein.

Jede Gleisketteneinheit 20, 21 ist an wenigstens einem Trägerstabelement 22, 23 gelagert, das gegenüber einer Hochachse 16 des Chassis' 10 in einem Winkel α von 30° bis 60° schräg ausgerichtet ist, und quer zur Fahrtrichtung der Gleisketteneinheiten bzw. des Fahrgestells.

Die Trägerstabelemente 22, 23 sind in Trägerstabführungen 11, 12 im Chassis 10 geführt, die beispielsweise durch ein Rechteckrohr gebildet sein können, wodurch sich neben hoher Biegesteifigkeit eine Verdrehsicherheit ergibt. Die Trägerstabelemente 22, 23 sind in Trägerstabführungen 11, 12 durch Bolzen 14 festlegbar. Dazu weisen die Trägerstabelemente 22, 23 mehrere Bolzenaufnahmebohrungen auf, damit sie in verschiedenen Positionen am Chassis 10 arretierbar sind.

Am Chassis 10 sind Stützarme 15.1, 15.2 angebracht, die bis auf eine Aufstandsebene 1 absenkbar sind.

Während in Fig. 1 die Trägerstabelemente 22, 23 ganz in die Trägerstabführungen 11, 12 eingeschoben sind und die Gleisketteneinheiten 20, 21 auf diese Weise so nah wie möglich am Chassis 10 anliegen, zeigt Fig. 2 den Zustand mit soweit wie möglich aus dem Chassis 10 heraus gezogenen Trägerstabelementen 22, 23, wodurch sich zwischen den Gleisketteneinheiten 20, 21 eine große Abstützbreite ergibt.

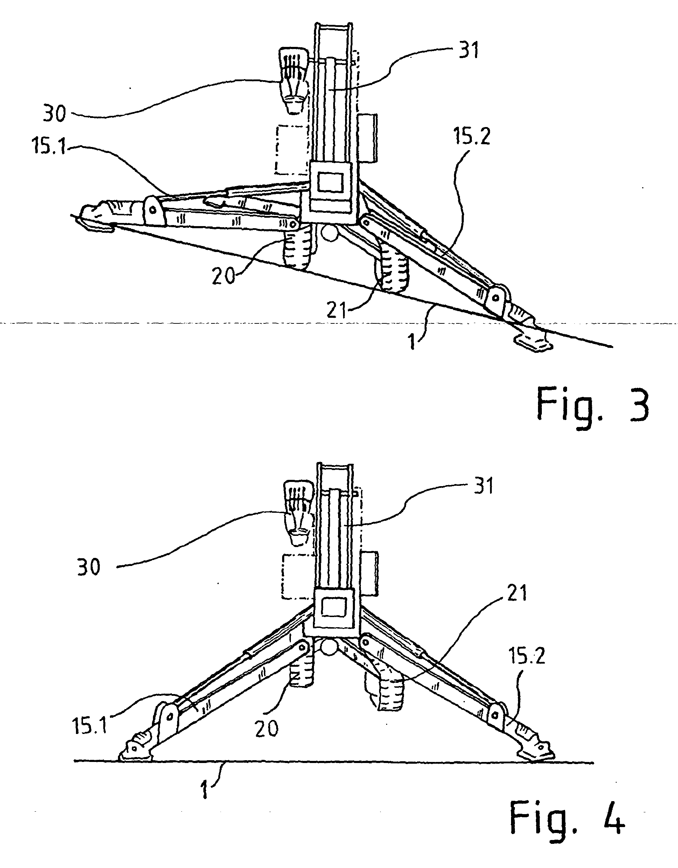

Bei Fahrten parallel zum Hang wird zunächst eine Nivellierung des Chassis 10 über die Stützarme 15.1, 15.2 vorgenommen. Die Verriegelung der Trägerstabelemente 22, 23 wird aufgehoben, so dass diese soweit aus der Trägerstabführungen 11, 12 heraus gleiten können, bis die Gleisketteneinheiten 20, 21 auf dem Boden 1 aufliegen. Die Stützarme 15.1, 15.2 können nun angehoben werden. Das erfindungsgemäße Fahrgestell kann nun auf den angepassten Gleisketteneinheiten 20, 21 parallel zum Hang bewegt werden, wie Fig. 3 zeigt. Dabei ist die Hochachse 16 des Chassis' 10 in etwa parallel zu einer Lotrechten.

In der stationären Arbeitsposition werden die Stützarme 15.1, 15.2 aufgesetzt, wie in Fig. 4 dargestellt, und geben einer der auf dem Chassis 10 angeordneten Arbeitsplattform 30 zusätzliche Stabilität.

Ist der Untergrund wieder eben, werden die Stützarme 15.1, 15.2 wieder aufgesetzt, und die Verriegelungen der Trägerstabelemente 22, 23 werden gelöst. Anschließend wird das Chassis 10 über die Stützarme 15.1, 15.2 abgesenkt, so dass über die Gleisketteneinheiten 20, 21 die Trägerstabelemente 22, 23 in die Trägerstabführungen 11, 12 eingeschoben werden. Die Arbeitsbühne ist nun wieder bereit, durch enge Durchfahrten hindurch bewegt zu werden.

## Patentansprüche

1. Mobiles Arbeitsbühnengerät mit einem an die Geländeneigung anpassbaren Fahrgestell mit zwei Gleisketteneinheiten (20, 21), die mit einem Chassis (10) verbunden sind und deren vertikaler Abstand zu dem Chassis (10) veränderbar ist, und mit einem auf dem Chassis angeordneten Auslegerarm (31) mit einer Arbeitsbühne (30),
**dadurch gekennzeichnet, dass**
- die Gleisketteneinheiten jeweils über wenigstens ein Trägerstabelement (22, 23) mit dem Chassis (10) verbunden sind, wobei die Trägerstabelemente (22, 23) schräg zu einer Hochachse (16) des Chassis (10) und der Gleisketteneinheit (10, 12) angestellt sind und sich die Trägerstabelemente (22, 23) quer zu einer Fahrtrichtung des Fahrgestells erstrecken;
- -dass wenigstens drei Stützarme (15.1, 15.2) mit dem Chassis (10) verbunden sind, welche mit ihrem einen Ende bis auf eine Aufstandsebene (1) absenkbar sind und
über welche das Chassis anzuheben ist und die Gleisketteneinheiten zu entlasten sind,
- dass die Trägerstabelemente (22, 23) am Chassis jeweils verriegelbar (10) in sich quer zur Fahrtrichtung des Fahrgestells erstreckenden Trägerstabführungen (11, 12) derart verschiebbar geführt sind, dass die entriegelten und über die Stützarme entlasteten Gleisketteneinheiten aufgrund ihres Gewichts mit ihren Träger-stabelementen (22, 23) in den Trägerstabführungen (11, 12) nach unten gleiten.

2. Mobiles Arbeitsbühnengerät nach Anspruch 1, **dadurch gekennzeichnet, dass** die Trägerstabelemente (22, 23) mit der Trägerstabführung (11, 12) durch manuell betätigte Steckbolzen oder fernbetätigbare Stellelemente in Bolzenaufnahmebohrungen (13, 14) arretierbar sind.

3. Mobiles Arbeitsbühnengerät nach Anspruch 1 oder 2, **dadurch gekennzeichnet, dass** die Trägerstabführung (11, 12) durch ein Rohrprofil gebildet ist.

4. Mobiles Arbeitsbühnengerät nach Anspruch 3, **dadurch gekennzeichnet, dass** das Trägerstabelement (22, 23) einen rechteckigen Querschnitt aufweist und in einem Rechteckrohr als Trägerstabführung (11, 12) im Chassis (10) geführt ist.

5. Mobiles Arbeitsbühnengerät nach einem der Ansprüche 1 bis 4, **dadurch gekennzeichnet, dass** die Trägerstabelemente (22, 23) mehrere Bolzenaufnahmebohrungen aufweisen und/oder die Trägerstabführungen (11, 12) jeweils wenigstens eine Bolzenaufnahmebohrung (13, 14) aufweist.

6. Mobiles Arbeitsbühnengerät nach einem der Ansprüche 1 bis 4, **dadurch gekennzeichnet, dass** die Trägerstabelemente (22, 23) wenigstens eine Bolzenaufnahmebohrung aufweist und die Trägerstabführungen (11, 12) jeweils wenigstens eine Bolzenaufnahmebohrung aufweisen.

7. Mobiles Arbeitsbühnengerät nach einem der Ansprüche 1 bis 6, **dadurch gekennzeichnet, dass** die Trägerstabelemente (22, 23) und die Trägerstabführungen (11, 12) in einem Winkel α von 30° bis 60°, insbesondere 45°, in Bezug auf eine Hochachse (16) des Chassis (10) angestellt sind.

8. Mobiles Arbeitsbühnengerät nach einem der Ansprüche 1 bis 7, **dadurch gekennzeichnet, dass** die Trägerstabelemente (22, 23) in den Trägerstabführungen (11, 12) unabhängig voneinander verschiebbar sind.

## Claims

1. Mobile working platform device having a running gear which can be adapted to the inclination of the ground surface and has two crawler chain units (20, 21) which are connected to a chassis (10) and whose vertical distance with respect to the chassis (10) can be changed, and having an extension arm (31) which is disposed on the chassis and has a working platform (30),
**characterised in that** the crawler chain units are connected to the chassis (10) in each case via at least one support rod element (22, 23), wherein the support rod elements (22, 23) are positioned in an inclined manner with respect to a vertical axis (16) of the chassis (10) and the crawler chain unit (10, 12), and the support rod elements (22, 23) extend transversely with respect to a direction of travel of the running gear;
at least three support arms (15.1, 15.2) are connected to the chassis (10) and can be lowered with one end to a standing plane (1), and by means of which the chassis is to be raised and the crawler chain units are to be relieved,
the support rod elements (22, 23) on the chassis (10) are displaceably guided in each case in a lockable manner in support rod guides (11, 12) extending transversely with respect to the direction of travel of the running gear, such that the unlocked crawler chain units which are relieved via the support arms slide downwards by reason of their weight with their support rod elements (22, 23) in the support rod guides (11, 12).

2. Mobile working platform device as claimed in claim 1, **characterised in that** the support rod elements (22, 23) can be locked with the support rod guide (11, 12) by means of manually actuated locking pins or remotely actuatable adjusting elements in pin receiving bores (13, 14).

3. Mobile working platform device as claimed in claim 1 or 2, **characterised in that** the support rod guide (11, 12) is formed by means of a tubular profile.

4. Mobile working platform device as claimed in claim 3, **characterised that** the support rod element (22, 23) comprises a rectangular cross-section and is guided in a rectangular tube as a support rod guide (11, 12) in the chassis (10).

5. Mobile working platform device as claimed in any one of claims 1 to 4, **characterised in that** the support rod elements (22, 23) comprise several pin receiving bores and/or the support rod guides (11, 12) comprises [*sic*] in each at least one pin receiving bore (13, 14).

6. Mobile working platform device as claimed in any one of claims 1 to 4, **characterised in that** the support rod elements (22, 23) comprises [*sic*] at least one pin receiving bore and the support rod guides (11, 12) comprise in each case at least one pin receiving bore.

7. Mobile working platform device as claimed in any one of claims 1 to 6, **characterised in that** the support rod elements (22, 23) and the support rod guides (11, 12) are positioned at an angle α of 30° to 60°, in particular 45°, in relation to a vertical axis (16) of the chassis (10).

8. Mobile working platform device as claimed in any one of claims 1 to 7, **characterised in that** the support rod elements (22, 23) can be displaced independently of each other in the support rod guides (11, 12).

## Revendications

1. Equipement mobile à plateforme de travail, qui comprend un chariot adaptable à la pente du terrain, incluant deux unités de chenilles (20, 21) qui sont connectées à un châssis (10) et dont la distance verticale au châssis (10) est modifiable, et une potence (31) montée sur le châssis et portant une plateforme de travail (30),
**caractérisé**
**en ce que** chacune des unités de chenilles est connectée au châssis (10) au moyen d'au moins un élément de barreau porteur (22, 23), les éléments de barreaux porteurs (22, 23) étant disposés obliquement par rapport à un axe vertical (16) du châssis (10) et aux unités de chenilles (20, 21), et les éléments de barreaux porteurs (22, 23) s'étendent transversalement à une direction de déplacement du chariot;
**en ce qu'**au moins trois bras d'appui (15.1, 15.2), dont une première extrémité peut être abaissée jusqu'à un plan (1) d'appui au sol et qui permettent de soulever le châssis et de décharger les unités de chenilles, sont connectés au châssis (10), et
**en ce que** les éléments de barreaux porteurs (22, 23) sont guidés à coulissement sur le châssis (10) dans des guidages (11, 12) de barreaux porteurs qui s'étendent transversalement à la direction de déplacement du chariot, en pouvant être respectivement verrouillés, d'une manière telle que les unités de chenilles déverrouillées et déchargées au moyen des bras d'appui coulissent vers le bas sous l'effet de leur poids, avec leurs éléments de barreaux porteurs (22, 23) dans les guidages (11, 12) de barreaux porteurs.

2. Equipement mobile à plateforme de travail selon la revendication 1, **caractérisé en ce que** les éléments de barreaux porteurs (22, 23) peuvent être bloqués avec les guidages (11, 12) de barreaux porteurs dans des alésages (13, 14) de réception d'axes, par des axes débrochables actionnés manuellement, ou par des éléments de commande manoeuvrables à distance.

3. Equipement mobile à plateforme de travail selon la revendication 1 ou 2, **caractérisé en ce que** les guidages (11, 12) de barreaux porteurs consistent en profils tubulaires.

4. Equipement mobile à plateforme de travail selon la revendication 3, **caractérisé en ce que** les sections transversales des éléments de barreaux porteurs (22, 23) sont rectangulaires, et qu'ils sont guidés dans le châssis (10) dans des tubes rectangulaires constituant les guidages (11, 12) de barreaux porteurs.

5. Equipement mobile à plateforme de travail selon l'une quelconque des revendications précédentes, **caractérisé en ce que** les éléments de barreaux porteurs (22, 23) comportent plusieurs alésages (13, 14) de réception d'axes et/ou que les guidages (11, 12) de barreaux porteurs comportent chacun au moins un alésage (13, 14) de réception d'axe.

6. Equipement mobile à plateforme de travail selon l'une quelconque des revendications 1 à 4, **caractérisé en ce que** les éléments de barreaux porteurs (22, 23) comportent au moins chacun un alésage de réception d'axe, et que les guidages (11, 12) de barreaux porteurs comportent au moins chacun un alésage de réception d'axe.

7. Equipement mobile à plateforme de travail selon l'une quelconque des revendications précédentes, **caractérisé en ce que** les éléments de barreaux porteurs (22, 23) et les guidages (11, 12) de barreaux porteurs forment un angle α de 30° à 60°, en particulier de 45°, avec un axe vertical (16) du châssis (10).

8. Equipement mobile à plateforme de travail selon l'une quelconque des revendications précédentes, **caractérisé en ce que** les éléments de barreaux porteurs (22, 23) peuvent coulisser indépendamment l'un de l'autre dans les guidages (11, 12) de barreaux porteurs.
